(19) Europäisches Patentamt / European Patent Office / Office européen des brevets

(11) **EP 2 375 056 A1**

(12) **EUROPÄISCHE PATENTANMELDUNG**

(43) Veröffentlichungstag:
**12.10.2011 Patentblatt 2011/41**

(51) Int Cl.:
*F02N 15/04* (2006.01)  *F16H 57/00* (2006.01)
*F16H 3/44* (2006.01)

(21) Anmeldenummer: **11160521.8**

(22) Anmeldetag: **30.03.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **30.03.2010 DE 102010003431**

(71) Anmelder: **Robert Bosch GmbH**
**70442 Stuttgart (DE)**

(72) Erfinder:
• **Skala, Peter**
**74321 Bietigheim-Bissingen (DE)**
• **Capek, Oliver**
**70195 Stuttgart (DE)**

(54) **Startvorrichtung mit Hohlrad- und Zwischenlagerdämpfung**

(57) Die Erfindung bezieht sich auf eine elektrische Maschine, insbesondere eine Startervorrichtung (10) für eine Verbrennungskraftmaschine. Die elektrische Maschine umfasst ein Umlaufgetriebe (83) und einen in einem Zahnkranz (25) der Verbrennungskraftmaschine einzurückendes Andrehritzel (22). Das Umlaufgetriebe (83) umfasst ein Hohlrad (95), das in einem Zwischenlager (101) gelagert ist. Das Hohlrad (95) und das Zwischenlager (101) stellen ein Bauteil (218) dar, welches eine Dämpfung entweder in Form einer Radialverrippung (244) oder in Form von axial verlaufenden federnden Verbindungselementen (224, 234, 236) umfasst.

**Fig. 2**

EP 2 375 056 A1

**Beschreibung**

Stand der Technik

EP 1 787 757 A1 bezieht sich auf eine elektromotorisch angetriebenes Schraub-oder Bohrwerkzeuggerät mit einem Planetengetriebe. Das Planetengetriebe umfasst ein Hohlrad sowie mit dem Hohlrad kämmende Planetenräder. Die Planetenräder sind angetrieben und über Achsen der gegenüber dem Hohlrad abrollenden Planetenräder einer Abtriebswelle antreibbar. Es ist eine Drehmomenteinstelleinrichtung vorgesehen, wobei das Hohlrad über radial nach innen federvorgespannte Rastkörper gehäusefest arretierbar ist und die Rastkörper bei Überschreiten eines Abschaltdrehmomentes nach außen radial verdrängbar sind, so dass das Hohlrad gegenüber dem Gehäuse drehbar ist und die Antriebswelle nicht mehr angetrieben ist. Es sind in sich in Umfangsrichtung des Hohlrades erstreckende Blattfedern vorgesehen, deren Hebelarmlänge zur Erzeugung verschiedener Biegekräfte, die auf einen betreffenden Rastkörper einwirken, in Umfangsrichtung einstellbar ist.

Bei bekannten Ausführungen aus dem Stand der Technik handelt es sich um einteilige, ungedämpfte Ausführungen sowie mehrteilig aufgebaute gedämpfte Ausführungen. Bei der gedämpften Ausführung ist zum Beispiel das Hohlrad innerhalb des Zwischenlagers drehbar angeordnet. Die Verdrehungsmöglichkeit des Hohlrades relativ zum Zwischenlager wird durch zwischen Hohlrad und Zwischenlager angeordnetem Gummielement begrenzt, so dass sich eine gegenüber dem ungedämpften Hohlrad verringerte Verdrehsteifigkeit zwischen dem Hohlrad und dem Zwischenlager ergibt. Diese Ausführungsmöglichkeit hat gegenüber dem ungedämpften Hohlrad den Vorteil, dass die Wirkung von Schlägen, die in Drehrichtung auftreten können, insbesondere beim Betrieb einer Startvorrichtung verringert werden kann und die Komponenten des Antriebes geschont werden, da deren mechanische Belastung bei auftretenden Stößen erheblich verringert wird. Neben der schonenden Materialbeanspruchung besteht die Möglichkeit, die Komponenten des Antriebes kleiner zu dimensionieren, da durch die erfindungsgemäß vorgeschlagenen Lösung ein Teil von bei Schlägen auftretender Energie durch die Dämpfung zwischen Hohlrad und Zwischenlager bereits absorbiert ist. Nachteilig gegenüber dem einteilig ausgebildeten ungedämpften Hohlrad sind die höheren Herstellkosten, die sich bei der mehrteiligen gedämpften Ausführung einstellen.

Offenbarung der Erfindung

Erfindungsgemäß wird eine einteilige Ausführung von Zwischenlager und Hohlrad vorgeschlagen, die aus Kunststoffmaterial, vorzugsweise im Wege des Spritzgussverfahrens hergestellt wird. Dabei können das Hohlrad, bei dem es sich insbesondere um das Hohlrad eines Umlaufgetriebes, so zum Beispiel eines Planetengetriebes handeln kann und das Zwischenlager durch federnde Elemente miteinander verbunden. So können in einer ersten Ausführungsmöglichkeit des der Erfindung zugrunde liegenden Gedankens, dämpfende Verbindungselemente eingesetzt werden, durch welche das aus Kunststoffmaterial spritzgegossene Hohlrad mit dem Zwischenlager verbunden ist. Die federnd ausgebildeten Verbindungselemente können stabförmig ausgebildet sein. Der Querschnitt kann rund oder auch quadratisch oder rechteckig oder in einer beliebigen anderen Geometrie ausgebildet sein. Je nach Länge der ringförmig angeordneten federnd ausgebildeten Verbindungselemente stellt sich eine größere oder geringere Steifigkeit zwischen dem Hohlrad und dem einteilig mit diesem ausgeführten Zwischenlager ein. Die ringförmige Anordnung der federnd ausgebildeten Verbindungselemente stellt sicher, dass Hohlrad und Zwischenlager ein einteiliges Bauteil sind, allein durch die Länge der federnd ausgebildeten Verbindungselemente lässt sich die Festigkeit bzw. Steifigkeit des erhaltenen Bauteiles beeinflussen. Das erfindungsgemäß vorgeschlagene Zwischenlager ist derart gestaltet, dass es strukturmechanisch gesehen als weiche Verbindung zweier starrer Körper, d.h. dem Zwischenlager und dem eigentlichen Hohlrad des Umlaufgetriebes angesehen werden kann. Produktionstechnisch gesehen, ist es ein Bauteil, welches insbesondere im Wege des Spritzgussverfahrens hergestellt wird. Durch die weiche Verbindung kann sich das Hohlrad in Bezug auf das Zwischenlager in einem bestimmten Bereich verdrehen, wodurch sich abrupt auftretende mechanische Belastungsspitzen, wie zum Beispiel Schläge oder Erschütterungen abfangen und dämpfen lassen. Die federnd ausgebildeten, sich in der ersten Ausführungsvariante in axiale Richtung erstreckenden Verbindungselemente können den Anforderungen hinsichtlich der Festigkeit und der Federkennlinie entsprechend in Anzahl und Form variiert werden.

Die federnd ausgebildeten Verbindungselemente können zum Beispiel als Biegefeder mit rechteckigem Querschnitt ausgeführt sein und hinsichtlich ihre axialen Länge der sich in ihrer Umfangsrichtung erstreckenden Breite und hinsichtlich der Höhe variiert werden. Durch diese Parameter können Bauraum, Federrate und Festigkeit signifikant beeinflusst werden.

Durch die elastische Auslegung der strukturweichen Verbindung zwischen dem Zwischenlager und dem Hohlrad können zum Beispiel auch so extreme Belastfälle wie die schlagartige Blockade des Ritzels (Stoppschlag) kompensiert werden, ohne dass es zu einer Beschädigung der erfindungsgemäß vorgeschlagenen gedämpften einteilig ausgebildeten Ausführung aus Kunststoffmaterial käme. Grundsätzlich gilt, dass je weicher die Teile des Antriebsstranges zwischen dem Anker und dem Andrehritzel der Startvorrichtung ausgebildet sind, eine desto geringere mechanische Belastung dieser Teile bei einem auftretenden Stoppschlag ausfällt. Die Belastung der Bauteile ist proportional von Zahnnormalkraft. Die Zahnnormalkraft wiederum ist abhängig von der Ritzeldrehzahl des Andrehritzels, vor dem Auftreten des Stoppschlags sowie der Übersetzung des Umlaufgetriebes. Des Weiteren ist die Zahnnormalkraft abhängig von der Gesamtsteifigkeit der Teile des Antriebsstranges zwischen Anker und Andrehritzel sowie dem Drehkreismoment des Ankers der Zähne und der Zähnezahl des Andrehritzels. Die Zahnnormalkraft berechnet sich gemäß folgender Beziehung zu:

$$F_N = \frac{4 \cdot \pi \cdot n \cdot i \cdot \sqrt{c \cdot \theta}}{z \cdot m}$$

n = Ritzeldrehzahl vor dem Stoppschlag
i = Übersetzung des Umlaufgetriebes
c = Gesamtsteifigkeit der Teile des Antriebstrangs zwischen Anker und Ritzel
θ = Trägermoment des Ankers
Z = Zähnezahl
m = Elastizitätsmodul

Die Gesamtsteifigkeit c hängt unter anderem von der Verdrehsteifigkeit des Hohlrades ab. Je höher dessen Verdrehsteifigkeit ist, desto höher wird auch die Gesamtsteifigkeit. Wird die Verdrehsteifigkeit des Hohlrades durch die oben beschriebenen Maßnahmen hingegen verringert, so verringert sich demzufolge zwangsläufig die Gesamtsteifigkeit c und damit die Belastung auf jede einzelne Komponente des Antriebsstranges zwischen Anker und Ritzel sowie auf das Antriebslager, d.h. das Zwischenlager.

In einer weiteren möglichen Ausführungsvariante der der Erfindung zugrunde liegenden Lösung, können zum Beispiel Taktelemente zwischen den sich in axiale Richtung erstreckenden Biegeelementen vorgesehen werden. Nach Erreichen einer bestimmten Verformung der als Biegefedern wirkenden federnden Verbindungselemente werden über die Kontaktelemente zwei benachbarte Federn verbunden, wodurch sich eine Veränderung, d.h. insbesondere ein Knick einer Steifigkeitslinie und ein flacherer Anstieg der Steifigkeitslinie erreichen lässt.

Kurze Beschreibung der Zeichnung

Anhand der Zeichnung wird die Erfindung nachstehend eingehender beschrieben.
Es zeigt:

Figur 1            eine Startvorrichtung in einem Längsschnitt,

Figur 2            eine erfindungsgemäße Ausführungsvariante eines einstückigen Bauteils mit sich in axialer Richtung erstreckenden, ringförmig angeordneten federnden Verbindungsstegen in einer ersten axialen Länge,

Figur 3            eine Ausführungsvariante der erfindungsgemäß vorgeschlagenen Lösung mit federnden Verbindungselementen, die sich in einer zweiten Axiallänge erstrekken,

Figur 4            ein mechanisches Ersatzmodell des Antriebes einer elektrischen Maschine, insbesondere einer Startvorrichtung,

Figur 5            nicht verformte federnde Verbindungselemente mit einseitig angeordneten Kontaktelementen,

Figur 5.1         die in Figur 5 dargestellte Anordnung im ausgelenkten Zustand,

Figur 5.2         der sich Zustand gemäß Figur 5.1 einstellende Knick der Federkennlinie und

Figuren 6 und 7    weitere Ausführungsvarianten der erfindungsgemäß vorgeschlagenen Lösung, bei der die Steifigkeit der Anordnung aus Zwischenlager und Hohlrad durch Variation des Querschnitts der Speichen, die radial angeordnete Federelemente darstellen, beeinflusst wird.

Ausführungsvarianten

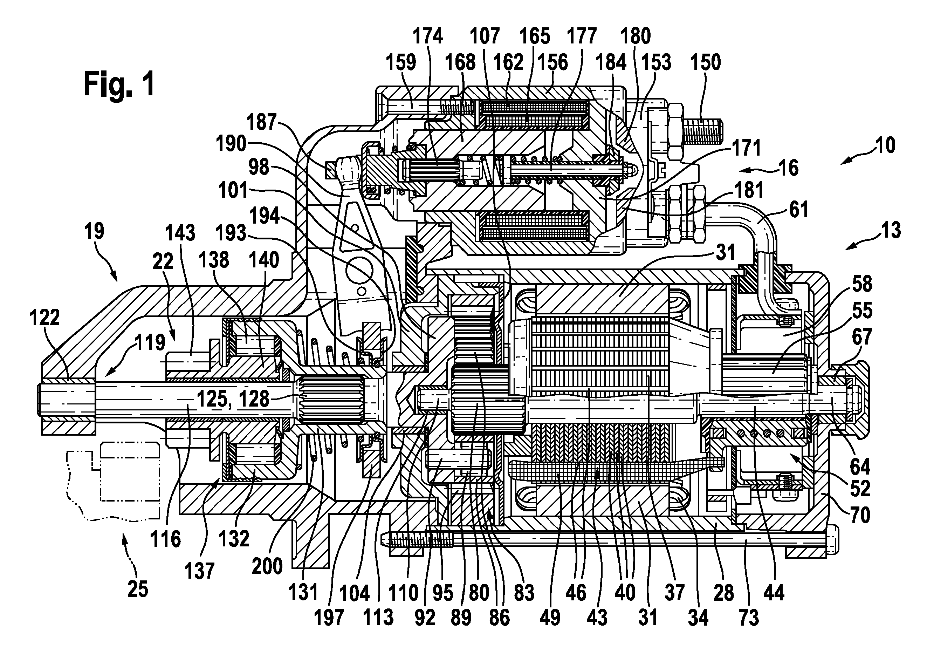

Figur 1 zeigt eine Startvorrichtung in einem Längsschnitt. In Figur 1 ist eine Startvorrichtung 10 dargestellt. Die Startvorrichtung 10 weist beispielsweise einen Startermotor 13 und eine Einrückrelais 16 auf. Der Startermotor 13 und das Einrückrelais 16 sind an einem gemeinsamen Antriebslagerschild 19 befestigt. Der Startermotor 13 hat die Aufgabe, ein Andrehritzel 22 anzutreiben, wenn es im Zahnkranz 25 der in Figur 1 nicht dargestellten Brennkraftmaschine eingespurt ist.
Der Startermotor 13 weist als Gehäuse ein Polrohr 28 auf, das an seinem Innenumfang mit Polschuhen 31 versehen ist, die jeweils von einer Erregerwicklung 34 umwickelt sind. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem dem Andrehritzel 22 abgewandten Ende der Antriebswelle 44 befindet sich ein Kommutator 52, der unter anderem aus einzelnen Kommutatorlamellen 55 aufgebaut ist. Die Kommutatorlamellen 55 sind in bekannter Weise mit der Ankerwicklung 49 derart elektrisch verbunden, dass sich bei Bestromung der Kommutatorlamellen 55 durch Kohlebürsten 58 eine Drehbewegung des Ankers 37 im Polrohr 28 einstellt. Eine zwischen dem Einspurrelais 16 und dem Startermotor 13 angeordnete Stromzuführung 61 versorgt im Einschaltzustand sowohl die Kohlebürsten 58 als auch die Erregerwicklung 34 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatorlagerdeckel 70 wiederum wird mittels Zuganker 73, die über den umfang des Polrohres 28 verteilt angeordnet sind (Schrauben, beispielsweise zwei, drei oder vier Stück) im Antriebslagerschild 19 befestigt. Es stützt sich dabei das Polrohr 28 am Antriebslagerschild 19 ab und der Kommutatorlagerdeckel 70 am Polrohr 28.

In Antriebsrichtung schließt sich an den Anker 37 ein Sonnenrad 80 an, das Teil eines Planetengetriebes 83 ist. Das Sonnenrad 80 ist von mehreren Planetenrädern 86 umgeben, üblicherweise drei Planetenräder 86, die mittels Wälzlagern 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98 als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist. Das Gleitlager 113 wiederum ist in einer zentralen Bohrung des Planetenträgers 98 aufgenommen. Der Planetenträger 98 ist einstückig mit der Abtriebswelle 116 verbunden. Die Abtriebswelle 116 ist mit ihrem vom Zwischenlager 101 abgewandten Ende 119 in einem weiteren Lager 122, welches im Antriebslagerschild 19 befestigt ist, abgestützt. Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer Geradverzahnung 125 (Innenverzahnung), die Teil einer Wellen-Naben-Verbindung ist. Diese Welle-Nabe Naben-Verbindung 128 ermöglicht in diesem Falle das axial geradlinige Gleiten eines Mitnehmers 131. Der Mitnehmer 131 ist ein hülsenförmiger Fortsatz, der einstückig mit einem topfförmigen Außenring 132 des Freilaufs 137 ist. Der Freilauf 137 (Richtgesperre) umfasst des Weiteren der Innenring 140, der radial innerhalb des Außenringes 132 angeordnet ist. Zwischen dem Innenring 140 und dem Außenring 132 sind Klemmkörper 138 angeordnet. Die Klemmkörper 138 verhindern in Zusammenwirkung mit dem Innenring 140 und dem Außenring 132 eine Relativbewegung zwischen dem Außenring 132 und dem Innenring 140 in eine zweite Richtung. Mit anderen Worten: Der Freilauf 137 ermöglicht eine Relativbewegung zwischen dem Innenring 140 und dem Außenring 132 lediglich in eine Richtung. In diesem Ausführungsbeispiel ist der Innenring 140 einstückig mit dem Andrehritzel 22 und dessen Schrägverzahnung 143 (Außenschrägverzahnung) ausgeführt.

Der Vollständigkeit halber sei im vorliegenden Zusammenhang noch auf den Einspurmechanismus eingegangen. Das Einrückrelais 16 weist einen Bolzen 150 auf, der einen elektrischen Kontakt darstellt und der an den Pluspol einer elektrischen Starterbatterie, die hier nicht dargestellt ist, angeschlossen ist. Der Bolzen 150 ist durch einen Relaisdeckel 153 hindurchgeführt. Der Relaisdeckel 153 schließt ein Relaisgehäuse 156 ab, das mittels mehrerer Befestigungselemente 159, zum Beispiel Schrauben, am Antriebslagerschild 19 befestigt ist. Im Einrückrelais 16 sind weiterhin eine Einzugswicklung 162 und eine Haltewicklung 165 angeordnet. Die Einzugswicklung 162 und die Haltewicklung 165 bewirken beide jeweils im eingeschalteten Zustand ein elektromagnetisches Feld, welches sowohl das Relaisgehäuse 156 (aus elektromagnetisch leitfähigem Material), einen linear beweglichen Anker 168 und einen Ankerrückschluss 171 durchströmt. Der Anker 168 trägt eine Schubstange 174, die beim linearen Einzug des Ankers 168 in Richtung zu einem Schaltbolzen 177 beweg wird. Mit dieser Bewegung der Schubstange 174 zum Schaltbolzen 177 wird dieser aus seiner Ruhelage in Richtung zu zwei Kontakten 180 und 181 hin bewegt, so dass eine am zu den Kontakten 180 und 181 am Ende des Schaltbolzens 177 angebrachte Kontaktbrücke 184 beide Kontakte 180 und 181 elektrisch miteinander verbindet. Dadurch wird vom Bolzen 150 elektrische Leistung über die Kontaktbrücke 184 hinweg zur Stromzuführung 61 und damit zu den Kohlebürsten 58 geführt. Dabei wird der Startermotor 13 bestromt.

Das Einrückrelais 16 bzw. der Anker 168 haben darüber hinaus auch die Aufgabe, mit einem Zugelement 187 einen im Antriebslagerschild 19 drehbeweglich angeordneten Hebel zu bewegen. Dieser Hebel 190, der üblicherweise als Gabelhebel ausgebildet ist, umgreift mit zwei hier nicht dargestellten "Zinken" an ihrem Außenumfang zwei Scheiben 193 und 194, um einen zwischen diesen eingeklemmten Mitnehmerring 197 zum Freilauf 137 hin gegen den Widerstand der Feder 200 zu bewegen und dadurch das Andrehritzel 22 in den Zahnkranz 25 der in Figur 1 nicht dargestellten Verbrennungskraftmaschine einzuspuren.

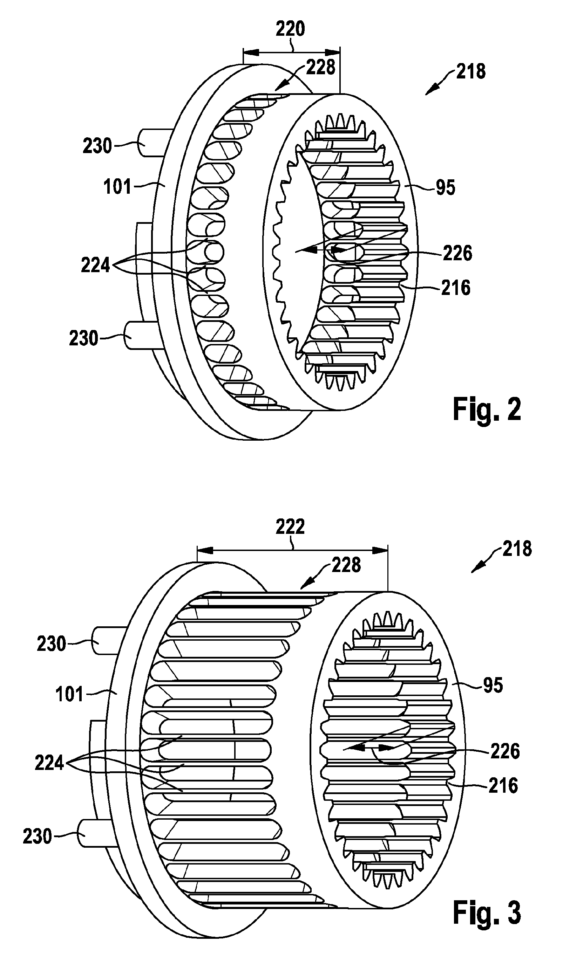

Figur 2 zeigt eine erste Ausführungsvariante eines kombinierten Zwischenlagers mit Hohlrad, hergestellt im Kunststoffspritzgussverfahren als einstückiges Bauteil.

Der Darstellung gemäß Figur 2 ist zu entnehmen, dass das Hohlrad 95 und das Zwischenlager 101 als einteiliges Bauelement 218, d.h. kombiniertes Zwi-

4

schenlager und Hohlrad ausgebildet sind. Bevorzugt wird das in Figur 2 dargestellte Bauelement im Kunststoffspritzgießverfahren hergestellt. Wie der Darstellung gemäß Figur 2 zu entnehmen ist, erstrecken sich zwischen dem Zwischenlager 101 und dem Hohlrad 95 mit Innenverzahnung 216 in ringförmiger Anordnung 280 einzelne in Umfangsrichtung gleichmäßig voneinander beabstandete federnde Verbindungselemente 224. Die federnd ausgebildeten Verbindungselemente 224 können mit rechteckförmigem, rundem, trapezoidalem oder ovalem Querschnitt hergestellt werden, was insbesondere deren Entformbarkeit, sprich Entnahme aus dem Spritzgusswerkzeug erleichtert. Aus der Darstellung gemäß Figur 2 geht hervor, dass die einzelnen federnden Verbindungselemente 224 in einer ringförmigen Anordnung 228 angeordnet sind und gleichmäßig - in Bezug auf die Umfangsrichtung - voneinander beabstandet sind. Des Weiteren geht aus der Darstellung gemäß Figur 2 hervor, dass die sich in axiale Richtung erstreckenden, federnd ausgebildeten Verbindungselemente 224 das Zwischenlager 101 und das Hohlrad 95 miteinander verbinden, wobei sich eine erste Axiallänge 220 des in Figur 2 dargestellten kombinierten Zwischenlagers und Hohlrades 218 einstellt. Je nach Erfordernissen, die an der Rotationssteifigkeit des einstückigen Bauteiles 218, das Hohlrad 95 und das Zwischenlager 118 umfassend, gestellt werden, können die sich in axiale Richtung erstreckenden, federnd ausgebildeten Verbindungselemente 224 auch in einer größeren oder geringeren Länge, vergleiche Darstellung gemäß Figur 3, ausgebildet werden.

Aus der Darstellung gemäß Figur 2 geht des Weiteren hervor, dass sich am Zwischenlager 101 eine Verzapfung 230 befindet, mit welcher das Zwischenlager 101 des einstückigen Bauteiles 218 gemäß der Ausführungsvariante in Figur 2 im Gehäuse der Startervorrichtung 10 befestigen lässt. Aus der Darstellung gemäß Figur 2 geht des Weiteren hervor, dass die Innenseite der sich in axiale Richtung erstreckenden, federnden Verbindungselemente 224 in Oberflächengüte ausgebildet sein kann, so dass innerhalb des Verzahnungsbereiches 226 gemäß der Darstellung in Figur 2 sich in axiale Richtung erstreckenden federnden Verbindungselemente 224 sowohl diese als auch die Innenverzahnung 216 am Hohlrad 95 ausgebildet werden kann.

Der Darstellung gemäß Figur 3 ist eine weitere Ausführungsvariante des einstückigen Bauteiles mit Zwischenlager und Hohlrad zu entnehmen.

Im Gegensatz zur Ausführungsvariante gemäß Figur 2 ist in der Ausführungsvariante gemäß Figur 3 zur erkennen, dass die sich in axiale Richtung erstreckenden, federnden Verbindungselemente 224 eine zweite, die erste Axiallänge 220 der Ausführungsvariante in Figur 2, übersteigende zweite Axiallänge 222 aufweisen. Damit ergibt sich hinsichtlich der Verformbarkeit der Anordnung 218 gemäß der Darstellung in Figur 3 eine wesentliche weichere Struktur.

Durch die Länge der sich in axiale Richtung erstreckenden federnd ausgebildeten Verbindungsbauteile 224 gemäß der Ausführungsvarianten in Figur 2 und 3 lässt sich die Federsteifigkeit des einstückigen Bauteiles 218, d.h. des kombinierten Zwischenlagers 101 und Hohlrades 95 entsprechend den geforderten Anforderungen anpassen.

Die in Figur 3 dargestellte Ausführungsvariante beansprucht aufgrund der zweiten Axiallänge 220 einen im Vergleich zur in Figur 2 dargestellten ersten Ausführungsvariante, größeren axialen Einbauraum. Auch in der Ausführungsvariante gemäß Figur 3 sind die sich in axiale Richtung erstreckenden, federnd ausgebildeten Verbindungselemente 224 in quaderförmigem, rechteckförmigem, quadratischem, rundem, polygonalem, trapezförmigem Querschnitt hergestellt. In Bezug auf die Herstellung, werden bevorzugt solche Querschnittsgeometrien der sich in axiale Richtung erstreckenden, federnd ausgebildeten Verbindungselemente 224 bevorzugt, die sich aus einem Kunststoffspritzgusswerkzeug, sehr einfach ohne dass Nacharbeiten erforderlich wären, entformen lassen.

Der Ausführungsvariante gemäß Figur 3 ist des Weiteren zu entnehmen, dass aufgrund der zweiten Axiallänge 222 der federnden Verbindungselemente 224 sich ein vergrößerter Abstand zwischen dem Zwischenlager 101 und dem Hohlrad 95 des Umlaufgetriebes 83 einstellt. Bei dem Umlaufgetriebe 83 handelt es sich bevorzugt um ein Planetengetriebe.

Auch in der Ausführungsvariante gemäß Figur 3 dienen die inneren Flächen der federnd ausgebildeten und sich in axiale Richtung erstreckenden Verbindungselemente 224 im Verzahnungsbereich 226 als Innenverzahnung 216 des Hohlrades 95 des kombinierten Zwischenlagers und Hohlrades als einstückiges Bauteil 218. Entsprechend der Dimensionierung der Planetenräder 86 des Umlaufgetriebes, welches insbesondere als Planetengetriebe beschaffen ist, bestimmt sich die axiale Länge des Verzahnungsbereiches 226. Dies gilt sowohl für die in Figur 2 perspektivisch dargestellte Ausführungsvariante als auch für die in Figur 3 perspektivisch dargestellte Ausführungsvariante des erfindungsgemäß vorgeschlagenen kombinierten Bauteiles 218, das Zwischenlager 101 und das Hohlrad 95 als ein Bauteil umfassend.

Der Vollständigkeit halber sei noch erwähnt, dass die Ausführungsvarianten gemäß der Figuren 2 und 3 des erfindungsgemäß vorgeschlagenen kombinierten Zwischenlagers und Hohlrades als ein Bauteil 218 im Wege des Kunststoffspritzgussverfahrens hergestellt werden.

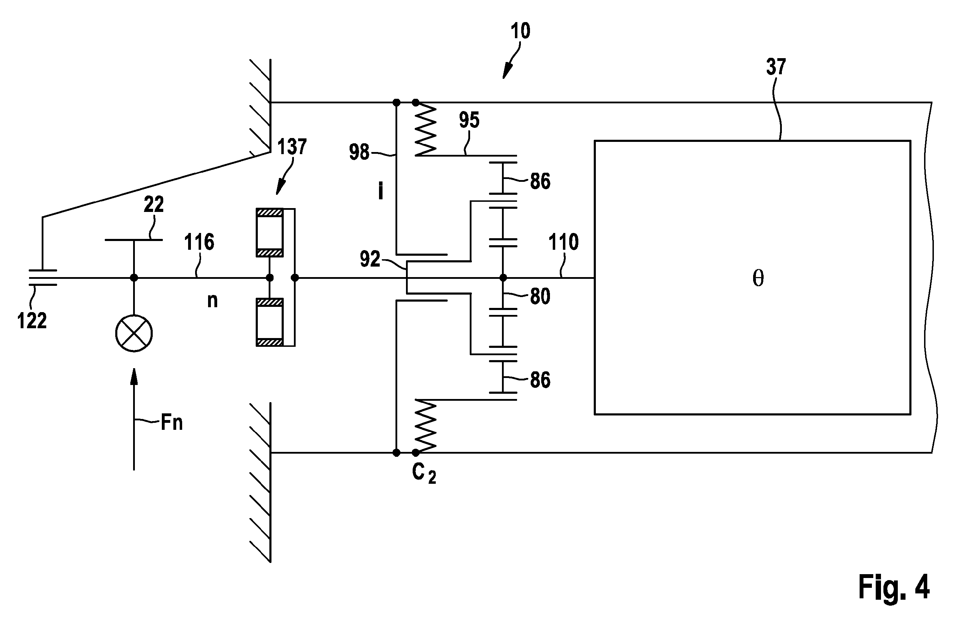

Der Darstellung gemäß Figur 4 ist ein Ersatzschaubild einer Startervorrichtung zu entnehmen.

Figur 4 zeigt die Einflussgrößen, die sich auf die Auslegung der Lagerung in Abhängigkeit von der Zahnnormalkraft $F_N$, welche am Andrehritzel 22 wirkt, einstellen. Mit n ist die Drehzahl des Andrehritzels 22 der Startervorrichtung 10 bezeichnet, i bezeichnet das Übersetzungsverhältnis des Umlaufgetriebes 83, bei dem es sich bevorzugt um eine Planetengetriebe handelt, $c_2$ bezeichnet die Steifigkeit des Hohlrades 95. Mit Bezugszeichen θ ist das Trägheitsmoment des Ankers 37 der elektrischen Maschine, bei der es sich insbesondere um eine Startervorrichtung zum Starten einer Verbrennungskraftmaschine handelt, gekennzeichnet. Die Abtriebswelle 116, auf der das Andrehritzel 220 gelagert ist, ist einerseits im Zwischenlager 101 und andererseits im weiteren Lager (A-Lager) 122 gelagert. Mit Bezugszeichen 137 ist der in Figur 1 bereits dargestellte Freilauf bezeichnet, welcher einen Antrieb des Andrehritzels 22 in lediglich eine Drehrichtung ermöglicht. Das in Figur 1 dargestellte Umlaufgetriebe 83, bei dem es sich insbesondere um ein Planetengetriebe handelt, umfasst neben den Planetenräder 83 und dem Sonnenrad 80 den Planetenträger 98 und das Hohlrad 95, dessen Steifigkeit mit $c_2$ bezeichnet ist. Des Weiteren umfasst das Umlaufgetriebe 83 gemäß der Ausführungsvariante in Figur 1 den Achszapfen 92 sowie den Wellenzapfen 110, der sich vom Anker 37 der elektrischen Maschine aus erstreckt.

Bevorzugt werden die federnd ausgebildeten Verbindungselemente 224 als Biegefedern 234 ausgebildet. Die Biegefedern 234 können einen rechteckförmigen oder auch einen anderen Querschnitt aufweisen und hinsichtlich ihrer Länger, ihrer Breite und ihrer Höhe in unterschiedlichen Dimensionen ausgebildet werden. Aufgrund der Dimensionierung der Biegefedern 234 können Bauraum, Federrate und Festigkeit beeinflusst werden.

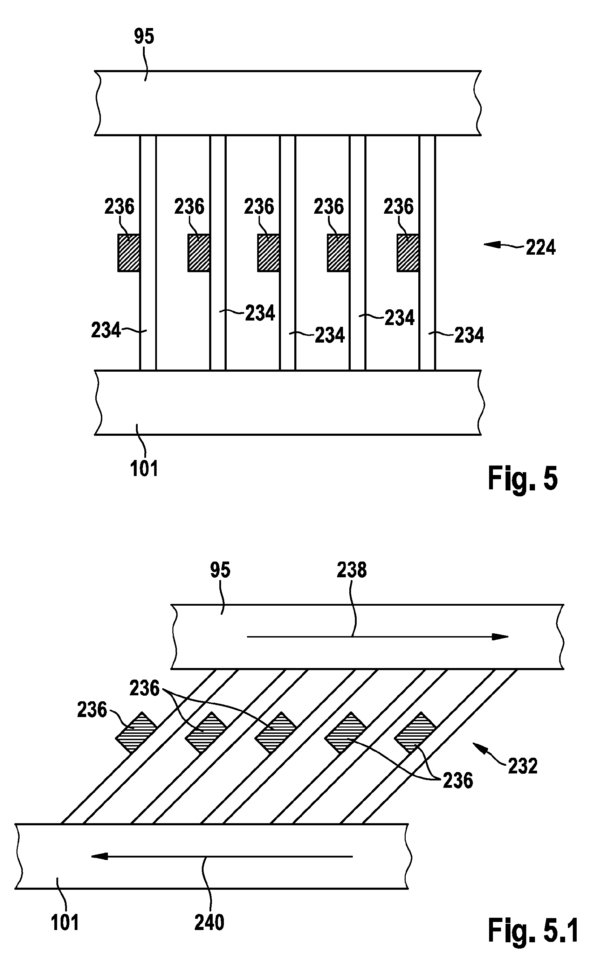

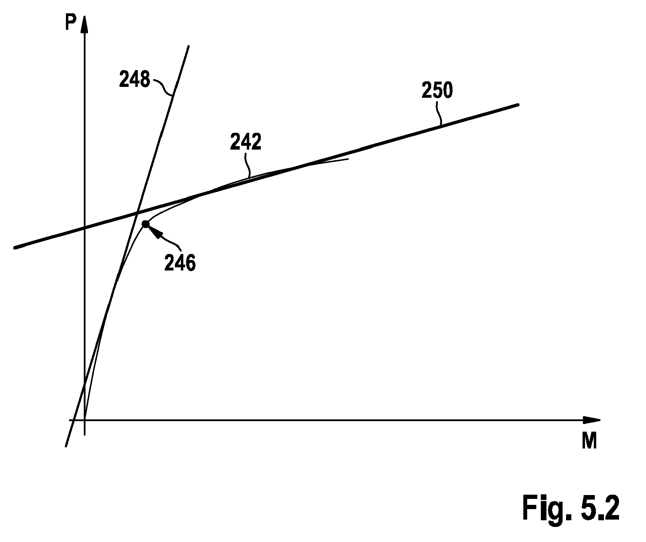

Für eine Ausführungsvariante mit einer Länge von 28, einer Breite von 6,8 und einer Höhe von 1,38 mm mit einer Anzahl von 37 Biegefedern 234, angeordnet auf einem mittleren Durchmesser von 53 mm der ringförmigen Anordnung 228 und einem Elastizitätsmodul von E = 8000 N/mm$^2$, kann die Verdrehsteifigkeit berechnet werden. Die Verdrehsteifigkeit kann anhand einer nicht linearen progressiven Federkennlinie ermittelt werden. Die Steifigkeit steigt mit zunehmendem Verdrehwinkel φ an. Bei einem maximal wirkenden Drehmoment von $M_{max}$ = 100 Nm ergibt sich ein maximaler Verdrehwinkel φ von $φ_{max}$ = 21°. Das progressive Verhalten der Dämpfungsanordnung ist auch daran abzulesen, dass für ein Moment M von 10 Nm ein Drehwinkel von φ = 2,75° erhalten wird. In der prinzipiellen Darstellung der Figur 5.2 ist über dem wirkenden Moment M der Verdrehwinkel dargestellt (P für φ stehend in Abhängigkeit von M).

Die Belastung der Bauteile der in den Figuren 2 und 3 dargestellten einstückig ausgebildeten Anordnung 218, das Zwischenlager 101 und das Hohlrad 95 umfassend erfolgt wie folgt. Abhängig von der Zahnnormalkraft $F_N$ der Ritzeldrehzahl n vor einem eventuell auftretenden Stoppschlag bei Blockieren des Andrehritzels 22, der Übersetzung des Umlaufgetriebes 83 von i sowie der Gesamtsteifigkeit der Teile des Antriebstranges zwischen Anker 37 und Andrehritzel 22, Gesamtsteifigkeit c und dem Trägheitsmoment des Ankers 37, bezeichnet durch θ, der Zähnezahl z wie des Moduls m berechnet sich die Zahnnormalkraft gemäß folgender Beziehung:

$$F_N = \frac{4 \cdot \pi \cdot n \cdot i \cdot \sqrt{c \cdot \theta}}{z \cdot m}$$

Die Gesamtsteifigkeit des erhaltenen Bauteiles 218 hängt unter anderem von der Verdrehsteifigkeit $c_2$ des Hohlrades 95 des einstückigen Bauteiles 218 ab. Je höher die Verdrehsteifigkeit $c_2$ des Hohlrades 95 ist, desto höher ist auch die Gesamtsteifigkeit c. Wird die Verdrehsteifigkeit $c_2$ des Hohlrades 95 durch die oben beschriebenen Maßnahmen verringert, so zum Beispiel eine Verlängerung der sich in axiale Richtung erstreckenden federnden Elemente 224, so verringert sich demzufolge auch die Gesamtsteifigkeit c und damit die Belastung auf jede einzelne Komponente des Antriebstrangs zwischen dem Andrehritzel 22 und dem Anker 37.

Den Figuren 5, 5.1 und 5.2 ist zu entnehmen, dass an den zum Beispiel als federnde Verbindungselemente 224 ausgebildeten stabförmigen Bauelementen Kontaktelemente 236 angebracht werden können. Bevorzugt befinden sich die Kontaktelemente 236 in der Mitte zwischen den relativ zueinander bewegbaren Bauteilen Hohlrad 95 und Zwischenlager 101. In der Darstellung gemäß Figur 5 befindet sich die einstückige Anordnung 218, das Hohlrad 95 und das Zwischenlager 101 umfassend, in einer nicht ausgelenkten Lage. Der Darstellung gemäß Figur 5.1 ist zu entnehmen, dass sich die Anordnung gemäß Figur 5 die in Figur 5.1 dargestellt ist, in einer ausgelenkten Lage befindet. Das Hohlrad 95 bewegt sich in einer ersten Richtung 238 während sich das Zwischenlager 101 demgegenüber in eine zweite Richtung 240, die entgegengesetzt zur ersten Richtung 238 ist, "bewegt". Die Folge davon ist, dass die sich in axiale Richtung erstreckenden, federnd ausgebildeten Verbindungselemente 224 eine ausgelenkte Position 232 bewegen, bis die Kontaktelemente 236 die jeweils nächsten der stabförmig ausgebildeten federnden Verdrängungselemente 224 kontaktieren.

Die Folge dieser rotatorischen Auslenkung in Umfangsrichtung sind in Figur 5.2 aufgetragen.

Die eine Steifigkeitskennlinie 242 des kombinierten Bauteiles 218, das Zwischenlager 101 und das Hohlrad 95 umfassend, folgt während einer ersten Phase der rotatorischen Verdrehung bis zu einem Knick 246 (Steifigkeitssprung) der Steifigkeitskennlinie 242 einer ersten Steigung 248. Sobald - wie in Figur 5.1 angedeutet, die Kontaktelemente 236 an den jeweils vorlaufenden sich in axiale Richtung erstreckenden federnden Verbindungselementen anliegen, folgt die Gesamtsteifigkeit des kombinierten Bauteiles 218 einer zweiten Steigung, angedeutet durch Bezugszeichen 250 in Figur 5.2. Demzufolge ergibt sich aufgrund des Kontaktes der Kontaktelemente 236 mit den federnd ausgebildeten Verbindungselementen 234 der Knick 246 in Bezug auf den Steifigkeitsverlauf der Steifigkeitskennlinie 242 wie in Figur 5.2 dargestellt.

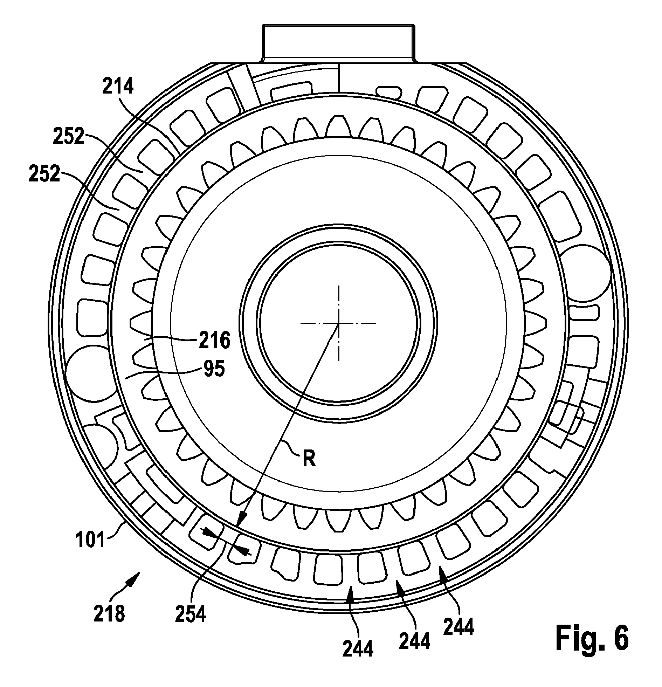

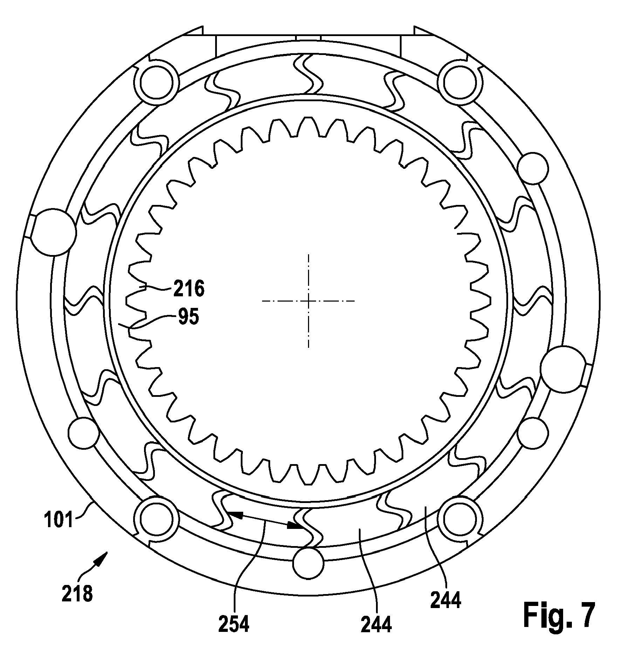

Den Darstellungen gemäß der Figuren 6 und 7 ist eine weitere, zweite Ausführungsvariante der erfindungsgemäß vorgeschlagenen Lösung zu entnehmen.

Gemäß der in den Figuren 6 und 7 dargestellten Ausführungsvariante ist das Hohlrad 95 mit dem dieses umschließenden Zwischenlager 101 durch eine Radialverrippung 244 verbunden. Auch bei dem in den Figuren 6 und 7 dargestellten Bauteil handelt es sich um ein einstückiges Bauteil, welches das Zwischenlager 101 und das Hohlrad 95 als kombiniertes Bauteil 218 zusammenfasst. Auch die in den Figuren 6 und 7 dargestellte, weitere, zweite Ausführungsvariante der erfindungsgemäß vorgeschlagenen Lösung, ist als einstückiges Bauteil ausgebildet, und wird bevorzugt im Wege des Kunststoffspritzgussverfahrens gefertigt.

Wie der Ausführungsvariante gemäß Figur 6 zu entnehmen ist, umfasst die Radialverrippung 244 eine Anzahl von Einzelspeichen 252, die durch zwischen den Einzelspeichen 252 liegende Freiräume getrennt sind. Die Einzelspeichen 252 können eine in radiale Richtung R unterschiedlichen Querschnitt aufweisen, der in radiale Richtung R gesehen, nach außen zu- oder abnehmen kann, je nachdem welche Federsteifigkeit gewünscht ist. Ein jeder Querschnitt, den die Einzelspeichen 252 der Radialverrippung 244 in radiale Richtung R gesehen aufweisen, ist durch Bezugszeichen 254 identifiziert.

In der Ausführungsvariante gemäß Figur 7 ist dargestellt, dass die Einzelspeichen 252 der Radialverrippung 244 zwischen dem Hohlrad 95 und dem Zwischenlager 101 in Umfangsrichtung der Radialverrippung 244 gesehen, einen im Wesentlichen identischen Querschnitt mit geschwungenen Seitenflächen aufweisen.

Mit beiden in den Ausführungsvarianten gemäß der Figuren 6 und 7 dargestellten Radialverrippungen lässt sich die Dämpfungscharakteristik des erhaltenen, einstückigen Bauteiles 218 das Zwischenlager 101 und das Hohlrad 95 des Umlaufgetriebes 83 umfassend, je nach individuellen Erfordernissen einstellen.

Prinzipiell ist es ohne Weiteres möglich, dass an den zum Beispiel als federnde Verbindungselemente ausgebildeten stabförmigen Bauelementen (Einzelspeichen 252 der Radialverrippung 244) ebenso Kontaktelemente 236 angebracht bzw. einstückig angespritzt werden können. Bevorzugt befinden sich die Kontaktelemente 236 in der Mitte zwischen den relativ zueinander bewegbaren Bauteilen Hohlrad 95 und Zwischenlager 101.

**Patentansprüche**

1. Elektrische Maschine, insbesondere Startervorrichtung (10) der Verbrennungskraftmaschine mit einem Umlaufgetriebe (83) und einem in einem Zahnkranz (25) der Verbrennungskraftmaschine einzurückenden Andrehritzel (22), wobei das Umlaufgetriebe (83) ein Hohlrad (95) aufweist, das in einem Zwischenlager (101) gelagert ist, wobei das Hohlrad (95) und das Zwischenlager (101) ein Bauteil (218) darstellen und eine Dämpfung entweder in Form einer Radialverrippung (244) oder in Form von axial verlaufenden, federnd ausgebildeten Verbindungselementen (224, 234, 236) ausgeführt ist, **dadurch gekennzeichnet, dass** die axial oder radial verlaufenden, federnden Verbindungselemente (224, 234, 236, 244, 252) mindestens einen Steifigkeitssprung (246) in der Steifigkeitskennlinie (242) erzeugende Kontaktelemente (236) aufweisen.

2. Elektrische Maschine nach Anspruch 1, **dadurch gekennzeichnet, dass** die Kontaktelemente (246) etwa in der Mitte der federnd ausgebildeten Verbindungselemente (224, 234, 236, 244, 252) zwischen dem Hohlrad (95) und dem Zwischenlager (101) angeordnet sind.

3. Elektrische Maschine nach Anspruch 1 oder 2, **dadurch gekennzeichnet, dass** das Bauteil (218) aus Hohlrad (95) und Zwischenlager (101) als Kunststoffspritzgussbauteil gefertigt ist.

4. Elektrische Maschine gemäß Anspruch 1, 2 oder 3, **dadurch gekennzeichnet, dass** die axial verlaufenden, federnden Verbindungselemente (224, 234, 236) in einer ringförmigen Anordnung (228) zwischen dem Hohlrad (95) und dem Zwischenlager (101) verlaufen.

5. Elektrische Maschine gemäß einem der Ansprüche 1 bis 4, **dadurch gekennzeichnet, dass** im Falle von axialen Verbindungselementen die axial verlaufenden, federnden Verbindungselemente (224, 234, 236) innerhalb eines Verzahnungsbereiches (226) eine Innenverzahnung (216) des Hohlrades (95) bilden.

6. Elektrische Maschine gemäß Anspruch 1, **dadurch gekennzeichnet, dass** im Falle von axialen Verbindungselementen die axial verlaufenden, federnd ausgebildeten Verbindungselemente (224, 234, 236) entsprechend der geforderten Verdrehsteifigkeit c des Gesamtverbundes in unterschiedlichen Axiallängen (220, 222) ausgeführt sind.

7. Elektrische Maschine gemäß einem der vorhergehenden Ansprüche, **dadurch gekennzeichnet, dass** das Umlaufgetriebe (83) ein Planetengetriebe ist.

Fig. 1

**Fig. 2**

**Fig. 3**

Fig. 4

EP 2 375 056 A1

95

236 236 236 236 236

← 224

234 234 234 234 234

101

**Fig. 5**

95 238

236 236 236 236

← 232

236

101 240

**Fig. 5.1**

Fig. 5.2

Fig. 6

**Fig. 7**

EP 2 375 056 A1

**EUROPÄISCHER RECHERCHENBERICHT**

Nummer der Anmeldung

EP 11 16 0521

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 591 696 A1 (PARIS & DU RHONE [FR]) 19. Juni 1987 (1987-06-19) * Seite 1, Zeile 1 - Zeile 8; Abbildungen 1,2 * * Seite 3, Zeile 11 - Zeile 22; Abbildungen 3-6 * ----- | 1-4,6,7 | INV. F02N15/04 F16H57/00 F16H3/44 |
| X,P | DE 10 2009 028926 A1 (BOSCH GMBH ROBERT [DE]) 3. März 2011 (2011-03-03) * Absatz [0029]; Abbildungen * ----- | 1,3-7 | |
| X | DE 43 02 854 C1 (BOSCH GMBH ROBERT [DE]) 9. Juni 1994 (1994-06-09) * Absätze [0006], [0010], [0016] - [0027]; Abbildungen * ----- | 1-4,6,7 | |
| X | EP 1 357 287 A2 (DENSO CORP [JP]) 29. Oktober 2003 (2003-10-29) * Absätze [0055], [0109], [0117] - [0119], [0125] - [0127]; Abbildungen 2,3,13A,13B * ----- | 1,3,4,6,7 | |
| A | EP 1 855 001 A1 (HANSEN TRANSMISSIONS INT [BE]) 14. November 2007 (2007-11-14) * Abbildungen * ----- | 1-7 | RECHERCHIERTE SACHGEBIETE (IPC) F02N F16H |

Der vorliegende Recherchenbericht wurde für alle Patentansprüche erstellt

| Recherchenort | Abschlußdatum der Recherche | Prüfer |
|---|---|---|
| München | 1. August 2011 | Ulivieri, Enrico |

EPO FORM 1503 03.82 (P04C03)

**EP 2 375 056 A1**

**ANHANG ZUM EUROPÄISCHEN RECHERCHENBERICHT
ÜBER DIE EUROPÄISCHE PATENTANMELDUNG NR.**

EP 11 16 0521

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-08-2011

| Im Recherchenbericht angeführtes Patentdokument | Datum der Veröffentlichung | Mitglied(er) der Patentfamilie | Datum der Veröffentlichung |
|---|---|---|---|
| FR 2591696 A1 | 19-06-1987 | DE 3668950 D1<br>EP 0230843 A1<br>JP 62147146 A | 15-03-1990<br>05-08-1987<br>01-07-1987 |
| DE 102009028926 A1 | 03-03-2011 | WO 2011023611 A1 | 03-03-2011 |
| DE 4302854 C1 | 09-06-1994 | FR 2701064 A1<br>GB 2274684 A<br>IT 1269212 B<br>JP 6280720 A<br>US 5533415 A | 05-08-1994<br>03-08-1994<br>21-03-1997<br>04-10-1994<br>09-07-1996 |
| EP 1357287 A2 | 29-10-2003 | US 2006060009 A1<br>US 2003200826 A1 | 23-03-2006<br>30-10-2003 |
| EP 1855001 A1 | 14-11-2007 | AU 2007201946 A1<br>BE 1017135 A3<br>CA 2586598 A1<br>CN 101070907 A<br>JP 2007303462 A<br>US 2007265133 A1 | 29-11-2007<br>04-03-2008<br>11-11-2007<br>14-11-2007<br>22-11-2007<br>15-11-2007 |

EPO FORM P0461

Für nähere Einzelheiten zu diesem Anhang : siehe Amtsblatt des Europäischen Patentamts, Nr.12/82

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1787757 A1